# EUROPEAN PATENT APPLICATION

(11) **EP 3 522 043 A1**
(43) Date of publication of application: **07.08.2019**
(21) Application number: 18200814.4
(22) Date of filing: 16.10.2018
(51) Int. Cl.: G06F 17/30

(54) **MUSIC SHARING METHOD AND SYSTEM**

(30) Priority: 01.02.2018 US 201862625304 P; 05.10.2018 US 201816152432
(71) Applicant: Nano Shield Technology Co., Ltd., 10492 Taipei City (TW)
(72) Inventor: Lee, James Cheng, 10492 Taipei City (TW)
(74) Representative: Gee, Steven William

(57) **Abstract**

A music sharing method and system is disclosed, for quickly searching for a specific song and related information through the music recognition technology, and applying the cloud push technology to share the uploaded specific song and related information to a specific member of the group member sharing platform. Furthermore, the invention enables a user to share the uploaded specific songs and related information to specific members of the group member sharing platform within the preset range. Moreover, the invention can recommend songs according to the requirements of the user through the cloud push technology. Moreover, the invention can provide product information suitable for the user through the cloud push technology. Moreover, the invention can understand the ranking of all songs through the cloud push technology, and know that the preferences of the user and all members in sharing certain categories of songs.

## Description

### CROSS-REFERENCE TO RELATED APPLICATION

This application claims the priorities of US provisional patent application No. 62/625,304, filed on February 1, 2018 and US non-provisional application No. 16/152,432 filed October 5, 2018, which are incorporated herewith by reference.

### BACKGROUND OF THE INVENTION

### 1. Field of the Invention

The technical field generally relates to a music sharing method and system.

### 2. The Prior Arts

Listening to music has been an indispensable part of human life since ancient times. With the evolution of the times, music production and playback technologies continue to evolve. Today, many users use electronic devices to connect to Pandora, Spotify, Apple Music and other online music streaming service platforms to listen to music through Internet, from radio stations, with a TV, or play music information stored directly in the music database of an electronic device.

However, the users consider that searching for the desired music information from the online music streaming service platform or the music database of the electronic device is like finding a needle in a haystack. Moreover, most users remember only a few more prominent segments in the music, rather than really understanding the characteristics of the entire music piece. As a result, the users end up wasting much time in the process of searching for music information, which is frustrating to music lovers.

In recent years, music recognition methods, such as, audio fingerprinting (AFP) technology and query by singing/humming (QBSH) have been used to quickly search for music information, which is a considerable breakthrough for music search.

Music AFP is a fast music search method. The user can record a piece of music being played in a noisy environment as a search target, and find the song that best matches the played music in the music AFP system.

The QBSH is a system based on singing/humming for performing song recognition, searching and comparison to find the sung/hummed song from a large music database. To accelerate the music search process, the humming/signing provides the most natural and direct way to conduct content-based system query or content-based music retrieval (CBMR) in the music database. With the rapid growth of digital sound data and music rendering technology, the automatic rendering an acoustic signal to become a musical score is now possible. Using a comprehensive and user-friendly music search system, the music lovers can easily and efficiently find the music clips in a large music database by gently singing the main melody of the music pieces. Such a music search system that obtains music through user singing/humming is usually called the QBSH or simply query by humming (QBH) system.

One of the earlier QBH systems was proposed by Ghias et al. in 1995. Ghias et al. proposed a method for calculating a pitch period for music search by an auto-correlation algorithm. In addition, the research results of Ghias et al. have also been granted US patent (US 5,874,686), which is hereby listed for reference. In this reference, the technique provides a QBH system that comprises a humming input device, a pitch tracking device, a search engine, and a melody database. The QBH system based on the research of Ghias et al. uses automatic correlation algorithm to track the information of the pitch and convert the hummed signal into coarse melodic contours. The melody database containing a Musical Instrument Digital Interface (MIDI) file converted to a coarse melody contour is used for music retrieval. Of course, during music search, an approximate string method based on dynamic programming technology is also used.

However, the above technology can only provide the user to quickly search for the desired song, the user can only listen to enjoy the song alone. The user can neither share the song and related information to friends and relatives through the cloud, nor get any recommended song list suitable for listening at a specific place or time. Moreover, the user can neither get any product information suitable for the user, nor know the song preference of other users or members.

### SUMMARY OF THE INVENTION

The primary objective of the present invention is to provide a music sharing method and system, for quickly searching for a specific song and related information through a music recognition technology, and then applying the cloud push technology to share the uploaded specific song and related information to a group of specific members on a sharing platform.

Another objective of the present invention is to provide a music sharing method and system, enabling a user to share a specific song and related information uploaded to a group of specific members on a sharing platform within a preset range.

Yet another objective of the present invention is to provide a music sharing method and system, able to recommend songs according to user requirements (for example, a specific place or time) through the cloud push technology to meet the needs of the user.

Yet a further objective of the present invention is to provide a music sharing method and system, able to provide product information of a product suitable for a user through a cloud push technology.

Yet another objective of the present invention is to provide a music sharing method and system, able to understand the ranking of all songs through the cloud push technology, and know that the preference a user and all group members to share certain categories of songs, and not to share songs in certain categories.

To achieve the foregoing and other objects, the present invention provides a music sharing method, which comprises the following steps of:

an input module of a user's electronic device receiving a piece of music information provided from a music source and transmitting the music information to a music recognition module of the user's electronic device;

a music database of the user's electronic device storing a plurality of songs and related information, and the music recognition module recognizing a feature value of the music information, and using the feature value of the music information and a plurality of songs stored in the music database for melody comparison to search for a specific song and related information matching the feature value of the music information from the music database;

using a cloud server able to transmit information through an internet to the user's electronic device, and the user's electronic device uploading a specific song and related information to a group member sharing platform of the cloud server;

the user's electronic device transmitting a music sharing request to the group member sharing platform of the cloud server, and the group member sharing platform of the cloud server selecting members according to a music sharing requirement, and aggregating the members into a list and transmitting to the user's electronic device;

a display screen of the user's electronic device displaying the list, the user selecting a member on the list, and the user's electronic device transmitting a member message of the selected member on the list to the group member sharing platform of the cloud server;

the cloud server able to transmit information through an internet to a member's electronic device, and the group member sharing platform of the cloud server integrating the specific song and related information into a sharing message according to the member message and transmitting to the member's electronic device, a display screen of the member's electronic device displaying the specific song and related information in contents of the sharing message.

Preferably, the user's electronic device transmits a recommended song request to the group member sharing platform of the cloud server, and the group member sharing platform of the cloud server selects songs according to the recommended song request, integrates the selected songs into a recommended song list and transmits to the user's electronic device, the display screen of the user's electronic device displays the recommended song list.

Preferably, the recommended song request is to request recommendation of a song suitable for listening to at a specific place.

Preferably, the recommended song request is to request recommendation of a song suitable for listening to at a specific time.

Preferably, the music source is an online music streaming service platform or a music playing device, and the music information is a melody played by the online music streaming service platform or the music playing device; the music recognition module comprises an audio fingerprinting module, the audio fingerprinting module recognizes the feature value of a piece of melody played by the online music streaming service platform or the music playing device, and uses the feature value of the piece of melody played by the online music streaming service platform or the music playing device and a plurality of songs stored in the music database for melody comparison to search for a specific song and related information matching the feature value of the piece of melody played by the online music streaming service platform or the music playing device from the music database.

Preferably, the music source is a human voice, and the music information is a melody hummed by the human voice; the music recognition module comprises a humming recognition module, and the humming recognition module recognizes the feature value of a melody hummed by the human voice, and uses the feature value of the melody hummed by the human voice to perform melody comparison with a plurality of songs stored in the music database to search for a specific song and related information matching the feature value of the melody hummed by the human voice from the music database.

Preferably, the group member sharing platform of the cloud server searches for the location of the user's electronic device by using a location service, and the group member sharing platform of the cloud server first uses the location service to find all the members' electronic devices within a preset range of the location of the user's electronic device according to the music sharing request, then aggregates all the members found into a list and transmits the list to the user's electronic device.

Preferably, the group member sharing platform of the cloud server determines the user's preference according to the specific songs uploaded by the user's electronic device, uploading location, uploading time, and/or the selected member, selects a product information suitable for the user provided by product suppliers of the group membership sharing platform of the cloud server, and then transmits the product information to the user's electronic device to be displayed on the display screen of the user's electronic device.

Preferably, the group member sharing platform of the cloud server counts the number of uploads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.

Preferably, the group member sharing platform of the cloud server counts the number of downloads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.

To achieve the above objects, the present invention provides a music sharing system, which comprises:
a music source, a user's electronic device, a member's electronic device, and a cloud server;
the music source providing a music information;
the user's electronic device comprising: an input module, a music recognition module, a music database, and a display screen; the music recognition module being electrically connected to the input module and the music database, and the input module receiving the music information from the music source, and transmitting the music information to the music recognition module, the music database storing a plurality of songs and related information, the music recognition module recognizing a feature value of the music information, and comparing the feature value of the music information against a plurality of songs stored in the database for melody-matching to search for a specific song and related information from the music database matching the feature value of the music information;
the member's electronic device comprising a display screen;
the cloud server being able to transmit information to the user's electronic device through an internet and to the member's electronic device through an internet, and comprising a group member sharing platform, and the group member sharing platform comprising a plurality of members; the user's electronic device uploading the specific song and related information to the group member sharing platform of the cloud server;
wherein, the user's electronic device transmitting a music sharing request to the group member sharing platform of the cloud server, and the group member sharing platform of the cloud server selecting the members according to the music sharing requirement, and aggregating the selected members into a list transmitted to the user's electronic device; the display screen of the user's electronic device displaying the list, and the user clicking on a member on the list, and the user's electronic device transmitting a member message of the selected member on the list to the group member sharing platform of the cloud server, the group member sharing platform of the cloud server integrating specific songs and related information into a sharing message and transmitting the information to the member's electronic device according to the member information, so that the display screen of the member's electronic device displaying contents of the specific song and related information in the sharing message.

Preferably, the user's electronic device transmits a recommended song request to the group member sharing platform of the cloud server, and the group member sharing platform of the cloud server selects songs according to the recommended song request, integrates the selected songs into a recommended song list and transmits to the user's electronic device, the display screen of the user's electronic device displays the recommended song list.

Preferably, the recommended song request is to request recommendation of a song suitable for listening to at a specific place.

Preferably, the recommended song request is to request recommendation of a song suitable for listening to at a specific time.

Preferably, the music source is an online music streaming service platform or a music playing device, and the music information is a melody played by the online music streaming service platform or the music playing device; the music recognition module comprises an audio fingerprinting module, the audio fingerprinting module recognizes the feature value of a piece of melody played by the online music streaming service platform or the music playing device, and uses the feature value of the piece of melody played by the online music streaming service platform or the music playing device and a plurality of songs stored in the music database for melody comparison to search for a specific song and related information matching the feature value of the piece of melody played by the online music streaming service platform or the music playing device from the music database.

Preferably, the music source is a human voice, and the music information is a melody hummed by the human voice; the music recognition module comprises a humming recognition module, and the humming recognition module recognizes the feature value of a melody hummed by the human voice, and uses the feature value of the melody hummed by the human voice to perform melody comparison with a plurality of songs stored in the music database to search for a specific song and related information matching the feature value of the melody hummed by the human voice from the music database.

Preferably, the group member sharing platform of the cloud server searches for the location of the user's electronic device by using a location service, and the group member sharing platform of the cloud server first uses the location service to find all the members' electronic devices within a preset range of the location of the user's electronic device according to the music sharing request, then aggregates all the members found into a list and transmits the list to the user's electronic device.

Preferably, the group member sharing platform of the cloud server determines the user's preference according to the specific songs uploaded by the user's electronic device, uploading location, uploading time, and/or the selected member, selects a product information suitable for the user provided by product suppliers of the group membership sharing platform of the cloud server, and then transmits the product information to the user's electronic device to be displayed on the display screen of the user's electronic device.

Preferably, the group member sharing platform of the cloud server counts the number of uploads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.

Preferably, the group member sharing platform of the cloud server counts the number of downloads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.

The effect of the present invention is that the ability to quickly search for specific songs and related information through music recognition technology, and then use cloud push technology to share the uploaded specific songs and related information to specific members on the group member sharing platform to share the life experience.

Furthermore, the present invention can provide a user to share the uploaded specific song and related information to a specific member on the group member sharing platform within a preset scope.

In addition, the present invention can recommend songs according to user requirements (for example, a specific place or a specific time) through the cloud push technology to meet the needs of the user.

Moreover, the present invention can provide product information suitable for users through cloud push technology.

Moreover, the present invention can understand the ranking of all songs through the cloud push technology, and know the preference for the user and all members to share certain categories of songs, and not to share certain categories of songs.

### BRIEF DESCRIPTION OF THE DRAWINGS

The embodiments can be understood in more detail by reading the subsequent detailed description in conjunction with the examples and references made to the accompanying drawings, wherein:
FIG. 1 shows a schematic view of the flowchart of music sharing method the in accordance with an exemplary embodiment;
FIG. 2 shows a schematic view of Step S1 of the music sharing method in accordance with an exemplary embodiment;
FIG. 3 shows a schematic view of Step S2 of the music sharing method in accordance with an exemplary embodiment;
FIG. 4 shows a schematic view of Step S3 of the music sharing method in accordance with an exemplary embodiment;
FIG. 5 shows a schematic view of Step S4 of the music sharing method in accordance with an exemplary embodiment;
FIG. 6 shows a schematic view of Step S5 of the music sharing method in accordance with an exemplary embodiment;
FIG. 7 shows a schematic view of Step S6 of the music sharing method in accordance with an exemplary embodiment;
FIG. 8 shows a schematic view the music sharing method and system of the present invention utilizing AFT and QBSH;
FIG. 9 shows a schematic view the music sharing method and system of the present invention utilizing LOCATION SERVICE;
FIG. 10 shows a schematic view of the music sharing method and system of the present invention using cloud push technology to recommend songs according to user request;
FIG. 11 shows a schematic view of the music sharing method and system of the present invention using cloud push technology to recommend product information suitable for users;
FIG. 12 shows a schematic view of the music sharing method and system of the present invention using cloud push technology to provide ranking information; and
FIG. 13 shows a schematic view of the structure of the music sharing system in accordance with an exemplary embodiment.

### DETAILED DESCRIPTION OF THE DISCLOSED EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

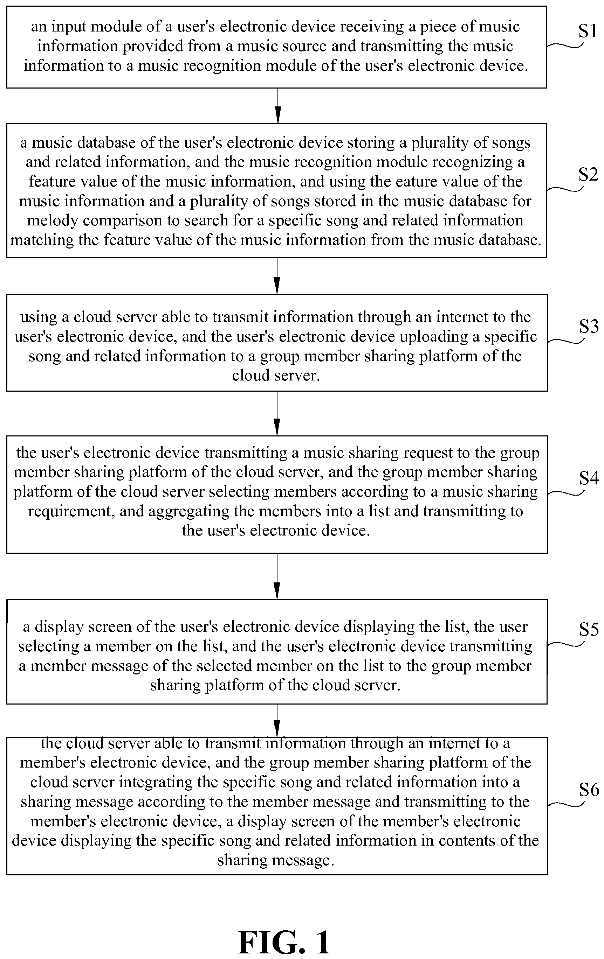

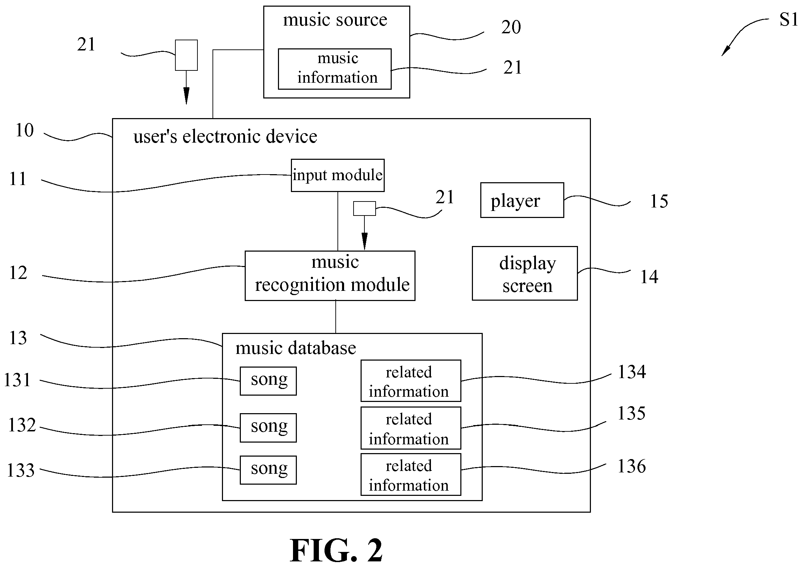

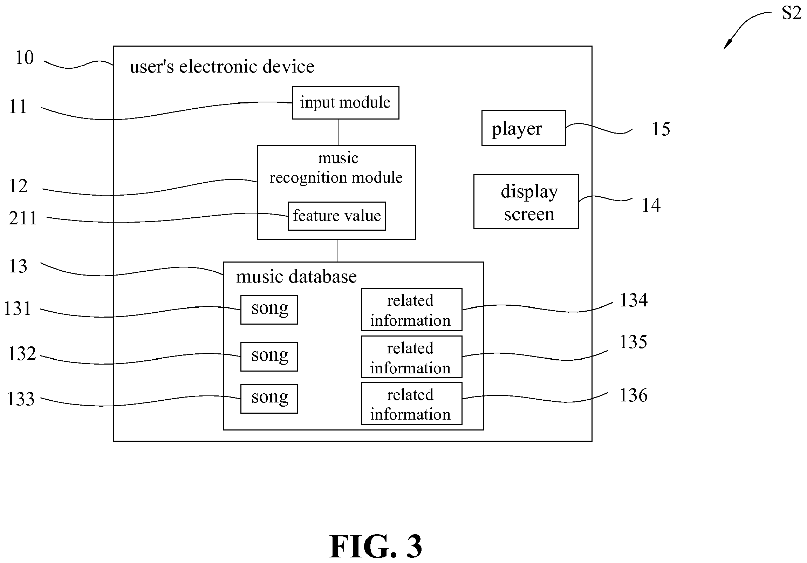

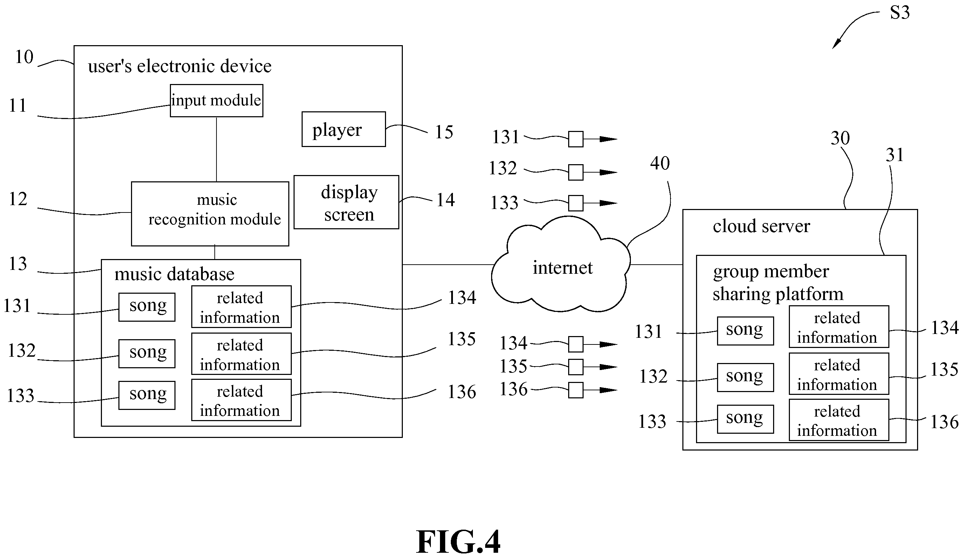

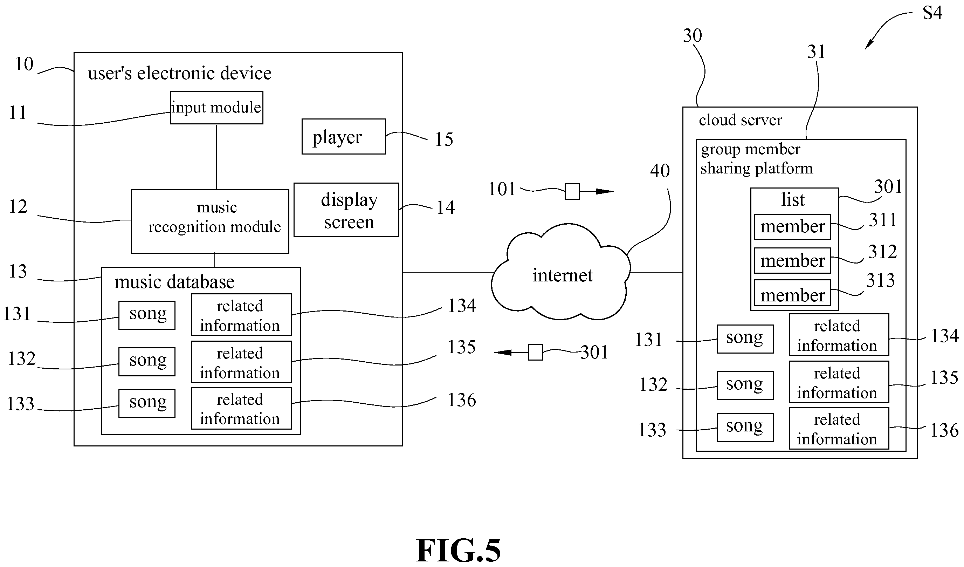

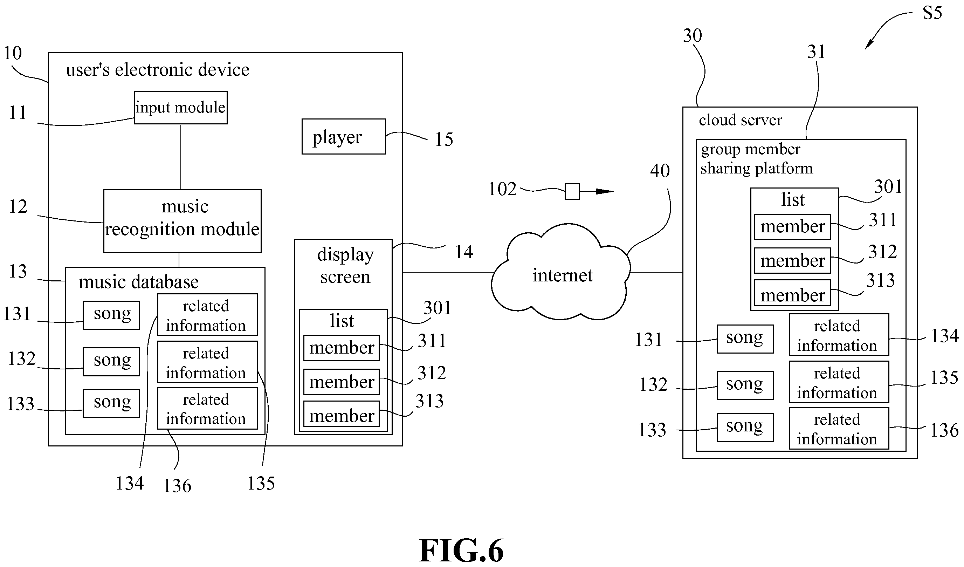

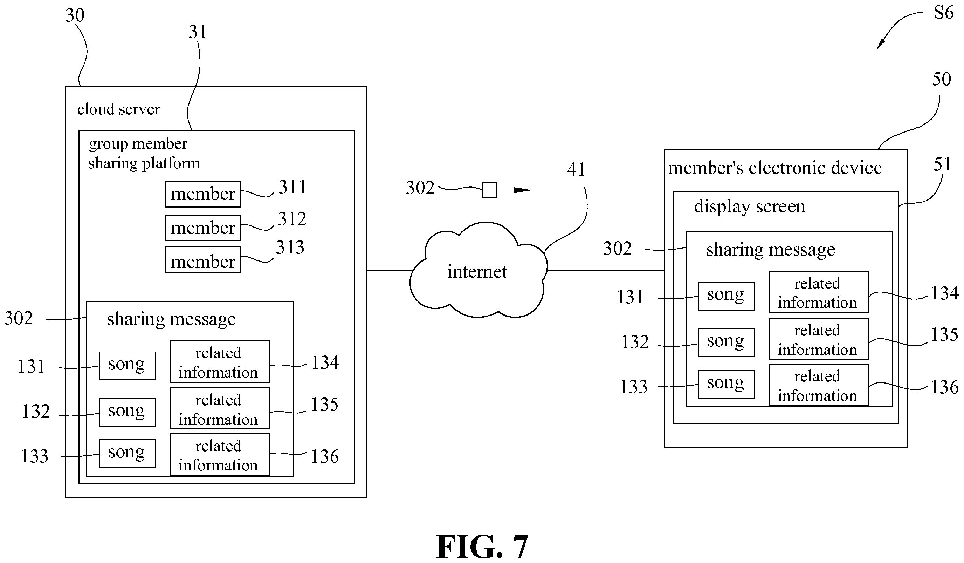

Refer to FIG. 1 to FIG. 7. FIG. 1 shows a schematic view of the flowchart of music sharing method the in accordance with an exemplary embodiment; FIG. 2 shows a schematic view of Step S1 of the music sharing method in accordance with an exemplary embodiment; FIG. 3 shows a schematic view of Step S2 of the music sharing method in accordance with an exemplary embodiment; FIG. 4 shows a schematic view of Step S3 of the music sharing method in accordance with an exemplary embodiment; FIG. 5 shows a schematic view of Step S4 of the music sharing method in accordance with an exemplary embodiment; FIG. 6 shows a schematic view of Step S5 of the music sharing method in accordance with an exemplary embodiment; FIG. 7 shows a schematic view of Step S6 of the music sharing method in accordance with an exemplary embodiment. The present invention provides a music sharing method, comprising the following steps:
Step S1: referring to FIG. 2, an input module 11 of a user's electronic device 10 receiving a piece of music information 21 from a music source 20 and transmitting the music information 21 to a music recognition module 12 of the user's electronic device 10. The user's electronic device 10 is, but not limited to, a smart phone, a portable multi-function digital multimedia player (such as an iPod), a tablet computer, a desktop computer, a notebook computer, a smart speaker, and the like. However, any device capable of surfing, receiving, and playing music can be used as the user's electronic device 10. The input module 11 is a microphone.
Step S2: referring to FIG. 3, a music database 13 of the user's electronic device 10 storing a plurality of songs 131, 132, 133 and related information 134, 135, 136, and the music recognition module 12 recognizing a feature value 211 of the music information 21, and using the feature value 211 of the music information 21 and the plurality of songs 131, 132, 133 stored in the music database 13 for melody comparison to search for a specific song 131, 132, 133 and related information 134, 135, 136 matching the feature value 211 of the music information 21 from the music database 13. The related information is, but not limited to, a song name, a song category, a length of time, an artist, an album, a publisher, a publishing year, and so on; however, any information related to the songs 131, 132, and 133 belongs to the scope covered of the related information 134, 135, 136.
Step S3: referring to FIG. 4, using a cloud server 30 able to transmit information through an internet 40 to the user's electronic device 10, and the user's electronic device 10 uploading a specific song 131, 132, 133 and related information 134, 135, 136 to a group member sharing platform 31 of the cloud server 30.
Step S4: referring to FIG. 5, the user's electronic device 10 transmitting a music sharing request 101 to the group member sharing platform 31 of the cloud server 30, and the group member sharing platform 31 of the cloud server 31 selecting members 311, 312, 313 according to a music sharing requirement 101, and aggregating the members 311, 312, 313 into a list 301 and transmitting to the user's electronic device 10.
Step S5: referring to FIG. 6, a display screen 14 of the user's electronic device 10 displaying the list 301, the user selecting a member 311, 312, 313 on the list 301, and the user's electronic device 10 transmitting a member message 102 of the selected member 311, 312, 313 on the list 301 to the group member sharing platform 31 of the cloud server 30.
Step S6: referring to FIG. 7, the cloud server 30 able to transmit information through an internet 41 to a member's electronic device 50, and the group member sharing platform 31 of the cloud server 30 integrating the specific song 131, 132, 133 and related information 134, 135, 136 into a sharing message 302 according to the member message 102 and transmitting to the member's electronic device 50, a display screen 51 of the member's electronic device 50 displaying the specific song 131, 132, 133 and related information 134, 135, 136 in contents of the sharing message 302. The member's electronic device 50 is, but not limited to, a smart phone, a portable multi-function digital multimedia player (such as an iPod), a tablet computer, a desktop computer, a notebook computer, a smart speaker, and the like. However, any device capable of surfing, receiving, and playing music can be used as the member's electronic device 50.

As such, the music sharing method of the present invention provides the user with means for quickly searching for a specific song 131, 132, 133 and related information 134, 135, 136 through audio fingerprinting technology (AFT), and then applying the cloud push technology to share the uploaded specific song 131, 132, 133 and related information 134, 135, 136 to a group of specific members 311, 312, 313 on a group member sharing platform 31.

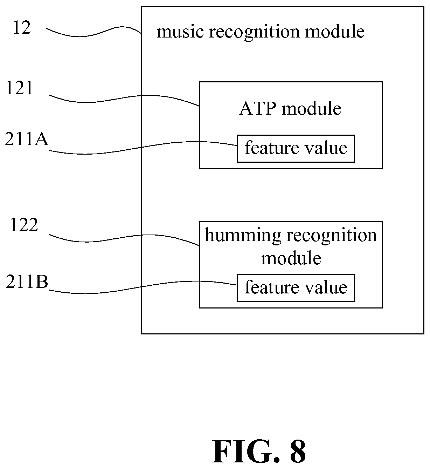

Refer to FIG. 8. FIG. 8 shows a schematic view the music sharing method and system of the present invention utilizing AFT and QBSH. The following paragraphs describe the music sharing method of the present invention utilizing AFT and QBSH, respectively.

Specifically, the music source 200 required for AFT is an online music streaming service platform or a music playing device, and the music information 201 is a melody played by the online music streaming service platform or the music playing device. The online music streaming service platform is Pandora, Spotify or Apple Music. The above three music streaming service platforms are internationally well-known brands; however, other online music streaming service platforms can also be used as music sources 200. The music playing device is any device equipped with a speaker and having a music playing function, such as a television, a radio, a smart phone, a portable multi-function digital multimedia player (such as an iPod), a tablet computer, a desktop computer, and a notebook computer, smart speaker, and so on. The music recognition module 12 comprises an AFP module 121, and the AFT module 121 identifies the feature value 211A of the melody played by the online music streaming service platform or the music playing device, and uses the feature value 211A of the melody played by the online music streaming service platform or the music playing device and the plurality of songs 131, 132, 133 stored in the music database 13 to perform a melody comparison to search for a specific song 131, 132, 133 and related information 134, 135, 135 from the music database 123 that match the feature value 211A of the melody played by the online music streaming service platform or the music playing device.

The music source 20 required for humming recognition technology is a human voice, and the music information 21 is a melody sung by the human voice. The music recognition module 12 comprises a humming recognition module 122. The humming recognition module 122 recognizes the feature value 211B of a melody sung by the human voice, and compares the feature value 211B of a melody sung by the human voice against the plurality of songs 131, 132, and 133 stored in the music database 13 for melody-matching to search for a specific song 131, 132, 133 and related information 134, 135, 136 matching the feature value 211B of a melody sung by the human voice from the music database 13.

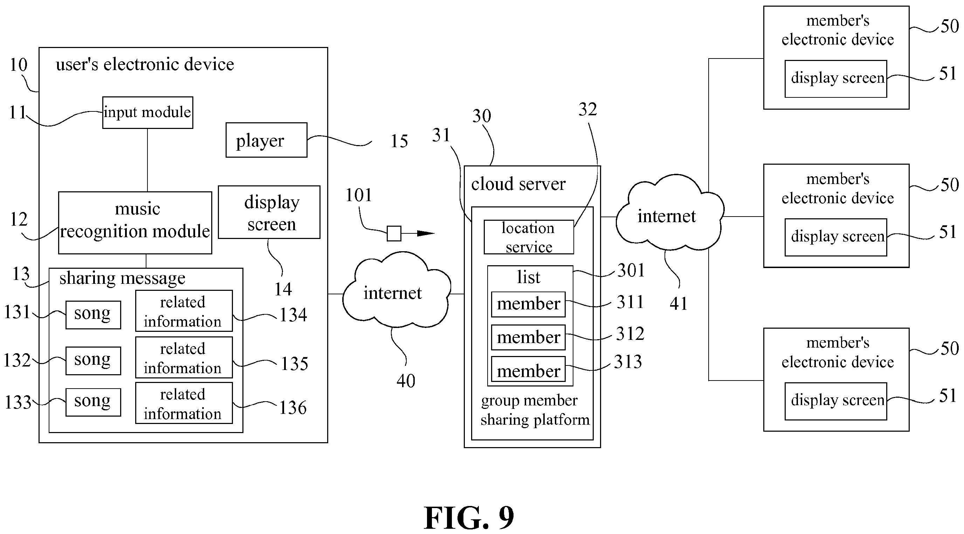

Refer to FIG. 9. FIG. 9 shows a schematic view the music sharing method and system of the present invention utilizing location service. In step S4 of a preferred embodiment, the group member sharing platform 31 of the cloud server 30 searches for the location of the user's electronic device 10 using a location service 32. The group member sharing platform 31 of the cloud server 30 first searches for all the member's electronic devices 50 within a preset range of the location of the user's electronic device 10 according to the music sharing request 101, and then integrates all the found members 311, 312, and 313 into a list 301. The preset range may be several square meters or even several square kilometers as set by the user's electronic device 10, or set by the group member sharing platform 31 of the cloud server 30. The group member sharing platform 31 of the cloud server 30 transmits the list 301 to the user's electronic device 10. Thereby, the music sharing method of the present invention can provide the user to share the uploaded specific songs 131, 132, 133 and related information 134, 135, 136 to the specific members 311, 312, 313 on the group member sharing platform 31 within the preset range.

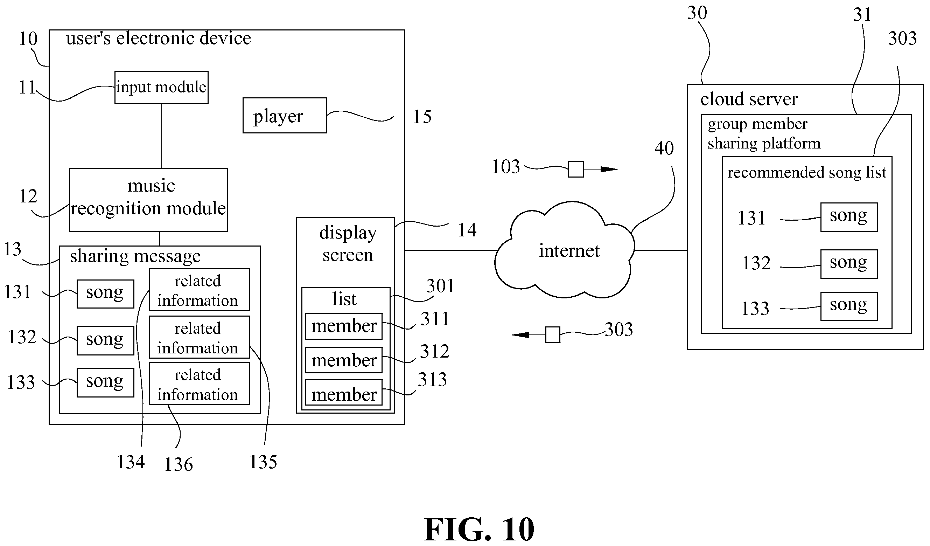

Refer to FIG. 10. FIG. 10 shows a schematic view of the music sharing method and system of the present invention using cloud push technology to recommend songs according to user request. In a preferred embodiment, the user's electronic device 10 transmits a recommended song request 103 to the group member sharing platform 31 of the cloud server 30, and the group member sharing platform 31 of the cloud server 30 selects songs 131, 132, 133 according to the recommended song request 103, integrates the selected songs 131, 132, 133 into a recommended song list 303 and transmits to the user's electronic device 10, the display screen 14 of the user's electronic device 10 displays the recommended song list 303. The user clicks to select a song 131, 132, 133 on the recommended song list 303, and a player 15 of the user's electronic device 10 plays the songs 131, 132, 133 selected by the user from the recommended song list 303. Therefore, the music sharing method of the present invention can recommend the songs 131, 132, and 133 according to the requirements of the user through the cloud push broadcasting technology to meet the needs of the user.

For example, when the user wants to listen to the songs 131, 132, and 133 that are suitable for listening at a specific place, the user's electronic device 10 can transmit the content of the recommended song request 103 as recommended songs 131, 132, and 133 suitable for listening at the specific place. The recommended song request 103 is sent to the group member sharing platform 31 of the cloud server 30. The group member sharing platform 31 of the cloud server 30 searches for the songs 131, 132, and 133 suitable for the specific place according to the recommended song request 103, and arranges the songs 131, 132, and 133 suitable for listening at the specific place into the recommended song list 303 to be transmitted to the user's electronic device 10. After the user's electronic device 10 receives the recommended song list 303 suitable for listening at the specific place, the display screen 14 displays the recommended song list 303 of songs 131, 132, 133 suitable for listening at specific place, and the user selects a song 131, 132, 133 on the song list 303 for listening at special place so that the player 15 of the user's electronic device 10 plays the song 131, 132, 133 selected by the user from the recommended song list 303 that is suitable for listening at the specific place.

Moreover, when the user wants to listen to the songs 131, 132, and 133 that are suitable for listening at a specific time, the user's electronic device 10 can transmit the content of the recommended song request 103 as recommended songs 131, 132, and 133 suitable for listening at the specific time. The recommended song request 103 is sent to the group member sharing platform 31 of the cloud server 30. The group member sharing platform 31 of the cloud server 30 searches for the songs 131, 132, and 133 suitable for the specific time according to the recommended song request 103, and arranges the songs 131, 132, and 133 suitable for listening at the specific time into the recommended song list 303 to be transmitted to the user's electronic device 10. After the user's electronic device 10 receives the recommended song list 303 suitable for listening at the specific time, the display screen 14 displays the recommended song list 303 of songs 131, 132, 133 suitable for listening at specific time, and the user selects a song 131, 132, 133 on the song list 303 for listening at special time so that the player 15 of the user's electronic device 10 plays the song 131, 132, 133 selected by the user from the recommended song list 303 that is suitable for listening at the specific time.

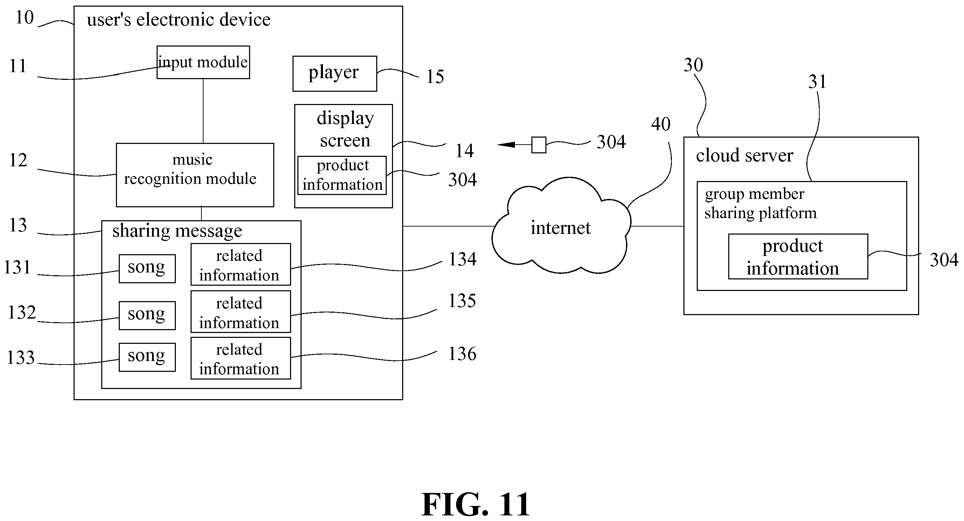

Refer to FIG. 11. FIG. 11 shows a schematic view of the music sharing method and system of the present invention using cloud push technology to recommend product information suitable for users. The group member sharing platform 31 of the cloud server 30 determines the user's preference according to the specific songs 131, 132, 133 uploaded by the user's electronic device 10, uploading location, uploading time, and/or the selected member, selects a product information suitable for the user provided by product suppliers of the group membership sharing platform 31 of the cloud server 30, and then transmits the product information 30 to the user's electronic device 10. The product information 304 can be, but not limited to, music related products, magazines, albums, art goods, and so on. Thereby, the music sharing method of the present invention can provide product information 304 suitable for the user through the cloud push broadcasting technology.

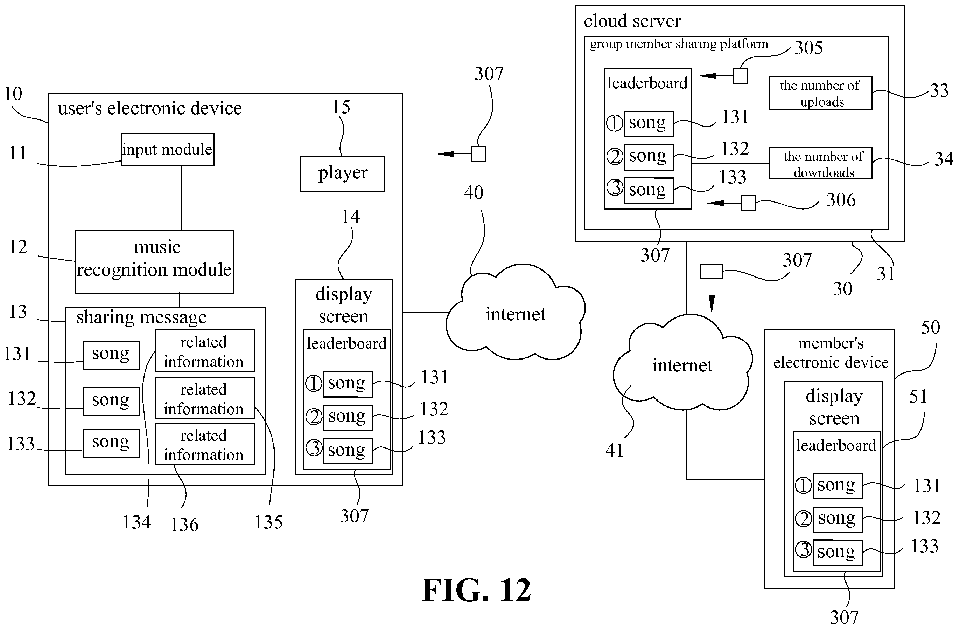

Refer to FIG. 12. FIG. 12 shows a schematic view of the music sharing method and system of the present invention using cloud push technology to provide ranking information. The group member sharing platform 31 of the cloud server 30 counts the number of uploads 33 and downloads 34 of all songs 131, 132, 133, and ranks all the songs on the group member sharing platform 31 of the cloud server 30 by using count results 305, 306 to obtain a leaderboard 307, and then transmits the leaderboard 307 to the user's electronic device 10 and all the members' electronic devices 50 to be displayed on the display screen 14 of the user's electronic device 10 and on the display screens 51 of all the members' electronic devices 50. The user and all members 311, 312, and 313 can clearly know the ranking of all the songs 131, 132, and 133 from the leaderboard 307 displayed on the display screens 14, 51 of the electronic devices 10, 50.

The number of uploads 33 of the songs 131, 132, 133 indicates the willingness of the user and all members 311, 312, 313 to share the specific songs 131, 132, 133. In other words, the higher the number of uploads 33 of the songs 131, 132, 133, the higher the willingness of the user and all members 311, 312, 313 to share the specific songs 131, 132, 133. Conversely, the lower the number of uploads 33 of the songs 131, 132, 133, the lower the willingness of the user and all members 311, 312, 313 to share the specific songs 131, 132, 133. The preferences of the user and all members 311, 312, and 313 to share certain categories of songs 131, 132, and 133, and not to share certain categories of songs 131, 132, and 133 can be observed by the number of uploads.

The number of downloads 34 of the songs 131, 132, 133 indicates the willingness of the user and all members 311, 312, 313 to accept the sharing of the specific songs 131, 132, 133 by the other members 311, 312, 313. In other words, the higher the number of downloads 34 of the songs 131, 132, 133, the higher the willingness of the user and all members 311, 312, 313 accepting the specific songs 131, 132, 133 shared by other members 311, 312, 313. Conversely, the lower the number of downloads 34 of the songs 131, 132, 133, the lower the willingness of the user and all members 311, 312, 313 accepting the specific songs 131, 132, 133 shared by other members 311, 312, 313. The preferences of the user and all members 311, 312, and 313 to accept certain categories of songs 131, 132, and 133 shared by other members 311, 312, 313, and not to accept certain categories of songs 131, 132, and 133 shared by other members 311, 312, 313 can be observed by the number of downloads.

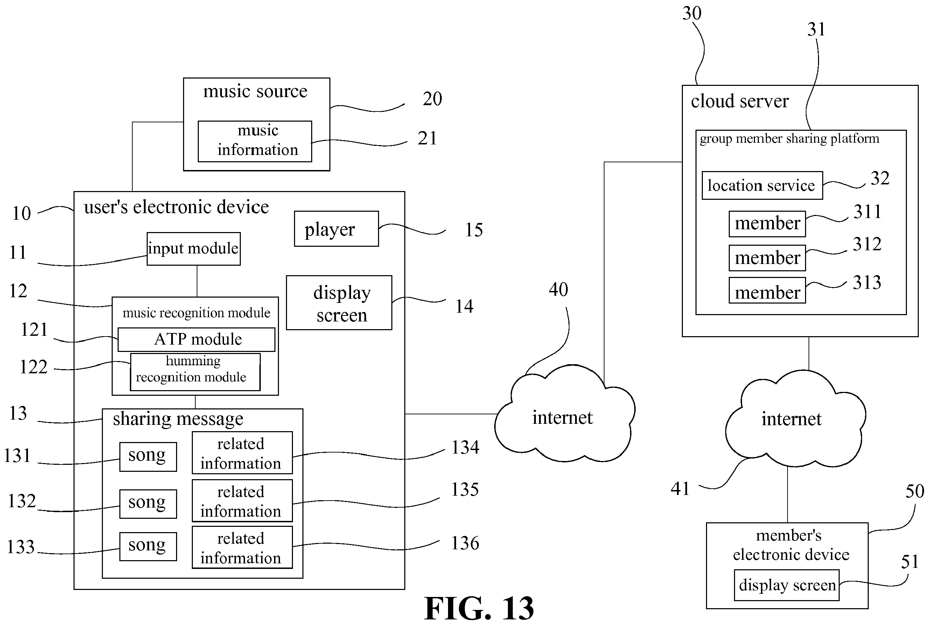

Refer to FIG. 13. FIG. 13 shows a schematic view of the structure of the music sharing system in accordance with an exemplary embodiment. The present invention provides a music sharing system, comprising: a music source 20, a user's electronic device 10, a member's electronic device 50, and a cloud server 30.

The music source 20 provides a music information 21.

The user's electronic device 10 comprises: an input module 11, a music recognition module 12, a music database 13, and a display screen 14; the music recognition module 12 being electrically connected to the input module 11 and the music database 13, as shown in FIG. 2, and the input module 11 receiving the music information 21 from the music source 20, and transmitting the music information 21 to the music recognition module 12, the music database 13 storing a plurality of songs 131, 132, 133 and related information 134, 135, 136, as shown in FIG. 3, the music recognition module 12 recognizing a feature value 211 of the music information 21, and comparing the feature value 211 of the music information 21 against a plurality of songs stored 131, 132, 133 in the database 13 for melody-matching to search for a specific song 131, 132, 133 and related information from 134, 135, 136 the music database 13 matching the feature value 211 of the music information 21. The user's electronic device 10 is, but not limited to, a smart phone, a portable multi-function digital multimedia player (such as an iPod), a tablet computer, a desktop computer, a notebook computer, a smart speaker, and the like. However, any device capable of surfing, receiving, and playing music can be used as the user's electronic device 10. The input module 11 is a microphone. The related information is, but not limited to, a song name, a song category, a length of time, an artist, an album, a publisher, a publishing year, and so on; however, any information related to the songs 131, 132, and 133 belongs to the scope covered of the related information 134, 135, 136.

The member's electronic device 50 comprises a display screen 51. The member's electronic device 50 is, but not limited to, a smart phone, a portable multi-function digital multimedia player (such as an iPod), a tablet computer, a desktop computer, a notebook computer, a smart speaker, and the like. However, any device capable of surfing, receiving, and playing music can be used as the member's electronic device 50.

The cloud server 30 is able to transmit information to the user's electronic device 10 through an internet 40 and to the member's electronic device 50 through an internet 41, and comprises a group member sharing platform 31, and the group member sharing platform 31 comprises a plurality of members 311, 312, 313. As shown in FIG. 4, the user's electronic device 10 uploads the specific song 131, 132, 133 and related information 134, 135, 136 to the group member sharing platform 31 of the cloud server 30.

Referring to FIG. 5, the user's electronic device 10 transmits a music sharing request 101 to the group member sharing platform 31 of the cloud server 30, and the group member sharing platform 31 of the cloud server 31 selects members 311, 312, 313 according to a music sharing requirement 101, and aggregates the members 311, 312, 313 into a list 301 and transmits to the user's electronic device 10.

Referring to FIG. 6, a display screen 14 of the user's electronic device 10 displays the list 301, the user selects a member 311, 312, 313 on the list 301, and the user's electronic device 10 transmits a member message 102 of the selected member 311, 312, 313 on the list 301 to the group member sharing platform 31 of the cloud server 30.

Referring to FIG. 7, the cloud server 30 is able to transmit information through an internet 41 to a member's electronic device 50, and the group member sharing platform 31 of the cloud server 30 integrates the specific song 131, 132, 133 and related information 134, 135, 136 into a sharing message 302 according to the member message 102 and transmits to the member's electronic device 50, a display screen 51 of the member's electronic device 50 displays the specific song 131, 132, 133 and related information 134, 135, 136 in contents of the sharing message 302.

As such, the music sharing method of the present invention provides the user with means for quickly searching for a specific song 131, 132, 133 and related information 134, 135, 136 through audio fingerprinting technology (AFT), and then applying the cloud push technology to share the uploaded specific song 131, 132, 133 and related information 134, 135, 136 to a group of specific members 311, 312, 313 on a group member sharing platform 31.

Refer to FIG. 8. FIG. 8 shows a schematic view the music sharing method and system of the present invention utilizing AFT and QBSH. The following paragraphs describe the music sharing method of the present invention utilizing AFT and QBSH, respectively.

Specifically, the music source 200 required for AFT is an online music streaming service platform or a music playing device, and the music information 201 is a melody played by the online music streaming service platform or the music playing device. The online music streaming service platform is Pandora, Spotify or Apple Music. The above three music streaming service platforms are internationally well-known brands; however, other online music streaming service platforms can also be used as music sources 200. The music playing device is any device equipped with a speaker and having a music playing function, such as a television, a radio, a smart phone, a portable multi-function digital multimedia player (such as an iPod), a tablet computer, a desktop computer, and a notebook computer, smart speaker, and so on. The music recognition module 12 comprises an AFP module 121, and the AFT module 121 identifies the feature value 211A of the melody played by the online music streaming service platform or the music playing device, and uses the feature value 211A of the melody played by the online music streaming service platform or the music playing device and the plurality of songs 131, 132, 133 stored in the music database 13 to perform a melody comparison to search for a specific song 131, 132, 133 and related information 134, 135, 135 from the music database 123 that match the feature value 211A of the melody played by the online music streaming service platform or the music playing device.

The music source 20 required for humming recognition technology is a human voice, and the music information 21 is a melody sung by the human voice. The music recognition module 12 comprises a humming recognition module 122. The humming recognition module 122 recognizes the feature value 211B of a melody sung by the human voice, and compares the feature value 211B of a melody sung by the human voice against the plurality of songs 131, 132, and 133 stored in the music database 13 for melody-matching to search for a specific song 131, 132, 133 and related information 134, 135, 136 matching the feature value 211B of a melody sung by the human voice from the music database 13.

Refer to FIG. 9. FIG. 9 shows a schematic view the music sharing method and system of the present invention utilizing location service. In step S4 of a preferred embodiment, the group member sharing platform 31 of the cloud server 30 searches for the location of the user's electronic device 10 using a location service 32. The group member sharing platform 31 of the cloud server 30 first searches for all the member's electronic devices 50 within a preset range of the location of the user's electronic device 10 according to the music sharing request 101, and then integrates all the found members 311, 312, and 313 into a list 301. The preset range may be several square meters or even several square kilometers as set by the user's electronic device 10, or set by the group member sharing platform 31 of the cloud server 30. The group member sharing platform 31 of the cloud server 30 transmits the list 301 to the user's electronic device 10. Thereby, the music sharing method of the present invention can provide the user to share the uploaded specific songs 131, 132, 133 and related information 134, 135, 136 to the specific members 311, 312, 313 on the group member sharing platform 31 within the preset range.

Refer to FIG. 10. FIG. 10 shows a schematic view of the music sharing method and system of the present invention using cloud push technology to recommend songs according to user request. In a preferred embodiment, the user's electronic device 10 transmits a recommended song request 103 to the group member sharing platform 31 of the cloud server 30, and the group member sharing platform 31 of the cloud server 30 selects songs 131, 132, 133 according to the recommended song request 103, integrates the selected songs 131, 132, 133 into a recommended song list 303 and transmits to the user's electronic device 10, the display screen 14 of the user's electronic device 10 displays the recommended song list 303. The user clicks to select a song 131, 132, 133 on the recommended song list 303, and a player 15 of the user's electronic device 10 plays the songs 131, 132, 133 selected by the user from the recommended song list 303. Therefore, the music sharing method of the present invention can recommend the songs 131, 132, and 133 according to the requirements of the user through the cloud push broadcasting technology to meet the needs of the user.

For example, when the user wants to listen to the songs 131, 132, and 133 that are suitable for listening at a specific place, the user's electronic device 10 can transmit the content of the recommended song request 103 as recommended songs 131, 132, and 133 suitable for listening at the specific place. The recommended song request 103 is sent to the group member sharing platform 31 of the cloud server 30. The group member sharing platform 31 of the cloud server 30 searches for the songs 131, 132, and 133 suitable for the specific place according to the recommended song request 103, and arranges the songs 131, 132, and 133 suitable for listening at the specific place into the recommended song list 303 to be transmitted to the user's electronic device 10. After the user's electronic device 10 receives the recommended song list 303 suitable for listening at the specific place, the display screen 14 displays the recommended song list 303 of songs 131, 132, 133 suitable for listening at specific place, and the user selects a song 131, 132, 133 on the song list 303 for listening at special place so that the player 15 of the user's electronic device 10 plays the song 131, 132, 133 selected by the user from the recommended song list 303 that is suitable for listening at the specific place.

Moreover, when the user wants to listen to the songs 131, 132, and 133 that are suitable for listening at a specific time, the user's electronic device 10 can transmit the content of the recommended song request 103 as recommended songs 131, 132, and 133 suitable for listening at the specific time. The recommended song request 103 is sent to the group member sharing platform 31 of the cloud server 30. The group member sharing platform 31 of the cloud server 30 searches for the songs 131, 132, and 133 suitable for the specific time according to the recommended song request 103, and arranges the songs 131, 132, and 133 suitable for listening at the specific time into the recommended song list 303 to be transmitted to the user's electronic device 10. After the user's electronic device 10 receives the recommended song list 303 suitable for listening at the specific time, the display screen 14 displays the recommended song list 303 of songs 131, 132, 133 suitable for listening at specific time, and the user selects a song 131, 132, 133 on the song list 303 for listening at special time so that the player 15 of the user's electronic device 10 plays the song 131, 132, 133 selected by the user from the recommended song list 303 that is suitable for listening at the specific time.

Refer to FIG. 11. FIG. 11 shows a schematic view of the music sharing method and system of the present invention using cloud push technology to recommend product information suitable for users. The group member sharing platform 31 of the cloud server 30 determines the user's preference according to the specific songs 131, 132, 133 uploaded by the user's electronic device 10, uploading location, uploading time, and/or the selected member, selects a product information suitable for the user provided by product suppliers of the group membership sharing platform 31 of the cloud server 30, and then transmits the product information 30 to the user's electronic device 10. The product information 304 can be, but not limited to, music related products, magazines, albums, art goods, and so on. Thereby, the music sharing method of the present invention can provide product information 304 suitable for the user through the cloud push broadcasting technology.

Refer to FIG. 12. FIG. 12 shows a schematic view of the music sharing method and system of the present invention using cloud push technology to provide ranking information. The group member sharing platform 31 of the cloud server 30 counts the number of uploads 33 and downloads 34 of all songs 131, 132, 133, and ranks all the songs on the group member sharing platform 31 of the cloud server 30 by using count results 305, 306 to obtain a leaderboard 307, and then transmits the leaderboard 307 to the user's electronic device 10 and all the members' electronic devices 50 to be displayed on the display screen 14 of the user's electronic device 10 and on the display screens 51 of all the members' electronic devices 50. The user and all members 311, 312, and 313 can clearly know the ranking of all the songs 131, 132, and 133 from the leaderboard 307 displayed on the display screens 14, 51 of the electronic devices 10, 50.

The number of uploads 33 of the songs 131, 132, 133 indicates the willingness of the user and all members 311, 312, 313 to share the specific songs 131, 132, 133. In other words, the higher the number of uploads 33 of the songs 131, 132, 133, the higher the willingness of the user and all members 311, 312, 313 to share the specific songs 131, 132, 133. Conversely, the lower the number of uploads 33 of the songs 131, 132, 133, the lower the willingness of the user and all members 311, 312, 313 to share the specific songs 131, 132, 133. The preferences of the user and all members 311, 312, and 313 to share certain categories of songs 131, 132, and 133, and not to share certain categories of songs 131, 132, and 133 can be observed by the number of uploads.

The number of downloads 34 of the songs 131, 132, 133 indicates the willingness of the user and all members 311, 312, 313 to accept the sharing of the specific songs 131, 132, 133 by the other members 311, 312, 313. In other words, the higher the number of downloads 34 of the songs 131, 132, 133, the higher the willingness of the user and all members 311, 312, 313 accepting the specific songs 131, 132, 133 shared by other members 311, 312, 313. Conversely, the lower the number of downloads 34 of the songs 131, 132, 133, the lower the willingness of the user and all members 311, 312, 313 accepting the specific songs 131, 132, 133 shared by other members 311, 312, 313. The preferences of the user and all members 311, 312, and 313 to accept certain categories of songs 131, 132, and 133 shared by other members 311, 312, 313, and not to accept certain categories of songs 131, 132, and 133 shared by other members 311, 312, 313 can be observed by the number of downloads.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A music sharing method, comprising the following steps:
an input module of a user's electronic device receiving a piece of music information provided from a music source and transmitting the music information to a music recognition module of the user's electronic device;
a music database of the user's electronic device storing a plurality of songs and related information, and the music recognition module recognizing a feature value of the music information, and using the feature value of the music information and a plurality of songs stored in the music database for melody comparison to search for a specific song and related information matching the feature value of the music information from the music database;
using a cloud server able to transmit information through an internet to the user's electronic device, and the user's electronic device uploading a specific song and related information to a group member sharing platform of the cloud server;
the user's electronic device transmitting a music sharing request to the group member sharing platform of the cloud server, and the group member sharing platform of the cloud server selecting members according to a music sharing requirement, and aggregating the members into a list and transmitting to the user's electronic device;
a display screen of the user's electronic device displaying the list, the user selecting a member on the list, and the user's electronic device transmitting a member message of the selected member on the list to the group member sharing platform of the cloud server;
the cloud server able to transmit information through an internet to a member's electronic device, and the group member sharing platform of the cloud server integrating the specific song and related information into a sharing message according to the member message and transmitting to the member's electronic device, a display screen of the member's electronic device displaying the specific song and related information in contents of the sharing message.

2. The music sharing method as claimed in claim 1, wherein the user's electronic device transmits a recommended song request to the group member sharing platform of the cloud server, and the group member sharing platform of the cloud server selects songs according to the recommended song request, integrates the selected songs into a recommended song list and transmits to the user's electronic device, the display screen of the user's electronic device displays the recommended song list.

3. The music sharing method as claimed in claim 2, wherein the recommended song request is to request recommendation of a song suitable for listening to at a specific place.

4. The music sharing method as claimed in claim 2, wherein the recommended song request is to request recommendation of a song suitable for listening to at a specific time.

5. The music sharing method as claimed in claim 1, wherein the music source is an online music streaming service platform or a music playing device, and the music information is a melody played by the online music streaming service platform or the music playing device; the music recognition module comprises an audio fingerprinting module, the audio fingerprinting module recognizes the feature value of a piece of melody played by the online music streaming service platform or the music playing device, and uses the feature value of the piece of melody played by the online music streaming service platform or the music playing device and a plurality of songs stored in the music database for melody comparison to search for a specific song and related information matching the feature value of the piece of melody played by the online music streaming service platform or the music playing device from the music database.

6. The music sharing method as claimed in claim 1, wherein the music source is a human voice, and the music information is a melody hummed by the human voice; the music recognition module comprises a humming recognition module, and the humming recognition module recognizes the feature value of a melody hummed by the human voice, and uses the feature value of the melody hummed by the human voice to perform melody comparison with a plurality of songs stored in the music database to search for a specific song and related information matching the feature value of the melody hummed by the human voice from the music database.

7. The music sharing method as claimed in claim 1, wherein the group member sharing platform of the cloud server searches for the location of the user's electronic device by using a location service, and the group member sharing platform of the cloud server first uses the location service to find all the members' electronic devices within a preset range of the location of the user's electronic device according to the music sharing request, then aggregates all the members found into a list and transmits the list to the user's electronic device.

8. The music sharing method as claimed in claim 1, wherein the group member sharing platform of the cloud server determines the user's preference according to the specific songs uploaded by the user's electronic device, uploading location, uploading time, and/or the selected member, selects a product information suitable for the user provided by product suppliers of the group membership sharing platform of the cloud server, and then transmits the product information to the user's electronic device to be displayed on the display screen of the user's electronic device.

9. The music sharing method as claimed in claim 1, wherein the group member sharing platform of the cloud server counts the number of uploads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.

10. The music sharing method as claimed in claim 1, wherein the group member sharing platform of the cloud server counts the number of downloads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.

11. A music sharing system, which comprises:
a music source, a user's electronic device, a member's electronic device, and a cloud server;
the music source providing a music information;
the user's electronic device comprising: an input module, a music recognition module, a music database, and a display screen; the music recognition module being electrically connected to the input module and the music database, and the input module receiving the music information from the music source, and transmitting the music information to the music recognition module, the music database storing a plurality of songs and related information, the music recognition module recognizing a feature value of the music information, and comparing the feature value of the music information against a plurality of songs stored in the database for melody-matching to search for a specific song and related information from the music database matching the feature value of the music information;
the member's electronic device comprising a display screen;
the cloud server being able to transmit information to the user's electronic device through an internet and to the member's electronic device through an internet, and comprising a group member sharing platform, and the group member sharing platform comprising a plurality of members; the user's electronic device uploading the specific song and related information to the group member sharing platform of the cloud server;
wherein, the user's electronic device transmitting a music sharing request to the group member sharing platform of the cloud server, and the group member sharing platform of the cloud server selecting the members according to the music sharing requirement, and aggregating the selected members into a list transmitted to the user's electronic device; the display screen of the user's electronic device displaying the list, and the user clicking on a member on the list, and the user's electronic device transmitting a member message of the selected member on the list to the group member sharing platform of the cloud server, the group member sharing platform of the cloud server integrating specific songs and related information into a sharing message and transmitting the information to the member's electronic device according to the member information, so that the display screen of the member's electronic device displaying contents of the specific song and related information in the sharing message.

12. The music sharing system as claimed in claim 11, wherein the user's electronic device transmits a recommended song request to the group member sharing platform of the cloud server, and the group member sharing platform of the cloud server selects songs according to the recommended song request, integrates the selected songs into a recommended song list and transmits to the user's electronic device, the display screen of the user's electronic device displays the recommended song list.

13. The music sharing system as claimed in claim 12, wherein the recommended song request is to request recommendation of a song suitable for listening to at a specific place.

14. The music sharing system as claimed in claim 12, wherein the recommended song request is to request recommendation of a song suitable for listening to at a specific time.

15. The music sharing system as claimed in claim 11, wherein the music source is an online music streaming service platform or a music playing device, and the music information is a melody played by the online music streaming service platform or the music playing device; the music recognition module comprises an audio fingerprinting module, the audio fingerprinting module recognizes the feature value of a piece of melody played by the online music streaming service platform or the music playing device, and uses the feature value of the piece of melody played by the online music streaming service platform or the music playing device and a plurality of songs stored in the music database for melody comparison to search for a specific song and related information matching the feature value of the piece of melody played by the online music streaming service platform or the music playing device from the music database.

16. The music sharing system as claimed in claim 11, wherein the music source is a human voice, and the music information is a melody hummed by the human voice; the music recognition module comprises a humming recognition module, and the humming recognition module recognizes the feature value of a melody hummed by the human voice, and uses the feature value of the melody hummed by the human voice to perform melody comparison with a plurality of songs stored in the music database to search for a specific song and related information matching the feature value of the melody hummed by the human voice from the music database.

17. The music sharing system as claimed in claim 11, wherein the group member sharing platform of the cloud server searches for the location of the user's electronic device by using a location service, and the group member sharing platform of the cloud server first uses the location service to find all the members' electronic devices within a preset range of the location of the user's electronic device according to the music sharing request, then aggregates all the members found into a list and transmits the list to the user's electronic device.

18. The music sharing system as claimed in claim 11, wherein the group member sharing platform of the cloud server determines the user's preference according to the specific songs uploaded by the user's electronic device, uploading location, uploading time, and/or the selected member, selects a product information suitable for the user provided by product suppliers of the group membership sharing platform of the cloud server, and then transmits the product information to the user's electronic device to be displayed on the display screen of the user's electronic device.

19. The music sharing system as claimed in claim 11, wherein the group member sharing platform of the cloud server counts the number of uploads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.

20. The music sharing system as claimed in claim 11, wherein the group member sharing platform of the cloud server counts the number of downloads of all songs, and ranks all the songs on the group member sharing platform of the cloud server by using count results to obtain a leaderboard, and then transmits the leaderboard to the user's electronic device and all the members' electronic devices to be displayed on the display screen of the user's electronic device and on the display screens of all the members' electronic devices.
